# EUROPEAN PATENT APPLICATION

(11) **EP 0 799 674 A1**
(43) Date of publication of application: **08.10.1997**
(21) Application number: 96303883.1
(22) Date of filing: 30.05.1996
(51) Int. Cl.: B23Q 11/00

(54) **Dust collector**

(30) Priority: 02.04.1996 JP 104628/96
(71) Applicant: NIKKEN CORPORATION, Tokyo 100 (JP)
(72) Inventor: Kishi, Mitsuhiro, Chiyoda-ku Tokyo 100 (JP)
(74) Representative: Kemp, Paul Geoffrey

(57) **Abstract**

A dust collector for effectively collecting broken pieces and dust particles of concrete in a construction site. The dust collector includes a bowl-shaped dust catching body (14, 72) having a large opening at a first end thereof and a working port (15, 73) at a second end thereof opposite to the large opening. The working port is positioned at a center of the second end of the dust catching body, and permits a crushing tool (62) to move in the working port or move away from the working port. The dust collector also includes an air closing mechanism (16, 74) fixed to the working port for permitting the crushing tool to enter therethrough while substantially preventing air to flow through the air closing mechanism, a sealing mechanism (27, 29) fixed to a periphery of the large opening of the dust catching body wherein the sealing mechanism is made of a flexible material and contacts a crushing operation surface (B, G), and a dust discharge mechanism (22, 77) which communicates with the dust catching body for sucking air from inside the dust catching body. The large opening of the dust catching body is directed to and brought into contact with the crushing operation surface by way of the sealing mechanism. Air in a space (D, F) defined between the dust catching body and the crushing operation surface is sucked by the dust discharge mechanism, and dust generated when the crushing operating surface is crushed by the crushing tool that is inserted through the air closing mechanism is discharged by the dust discharge mechanism.

## Description

### BACKGROUND OF THE INVENTION

### 1. Field of the Invention:

The present invention relates to a dust collector capable of effectively collecting broken pieces or dust particles of concrete generated during crushing operations in a construction site, etc.

### 2. Prior Art:

There occur frequently crushing operations for crushing floors, walls, ceilings, made of concrete and stone in operations for constructing, reforming, pulling down buildings, penetrating ducts, etc. In such crushing operations, a bit attached to an electrically-powered drill or hammer is brought into contact with a floor surface, a wall surface or a ceiling surface, thereby boring a hole or defining an opening in the floor surface, etc. Further, the bit attached to the electrically-powered hammer is brought into contact with the floor surface, wall surface, ceiling surface, and the bit is vibrated by the same hammer, thereby peeling off such surfaces. Further, in such crushing operations, the drill or bit gives an impact to the floor, the wall and the ceiling to crush concrete and stone, which is very effective compared with a manual crushing operation.

In such crushing operations, the drill or bit impacts against concrete or stone to thereby crush concrete and stone, thus dust particles and small pieces of concrete and stone are scattered. In such a working environment, fine dust particles are scattered, especially, if the work is performed in closed indoor spaces. Dust particles float like a white mist. If operators inhale the air in such an environment where the dust particles float, it causes anthracotic tuberculosis, and hence it is very unhygienic. To work in such an inferior environment, operators wear dust proof masks so as not to breath in the dust particles generated in the crushing operations. However, even if the operators wear dust proof masks, they sometimes breath the dust particles since all dust particles cannot be removed from the air that is inhaled. Further, when the dust particles are generated in the crushing operation, the dust particles flow at the periphery of the working site, and hence operators who do not wear dust proof masks inhale the dust particles, causing secondary contamination.

When concrete or stone is crushed, fine or small pieces of dust particles are scattered on a floor around the work site after the crushing operation is completed, and hence the work site must be cleaned after the completion of crushing operation. Dust particles of crushed concrete and stone are fine particles and they cannot be easily cleaned even if the work site is swept with a broom. Even if water is sprinkled to give moisture to the dust particles to facilitate the cleaning, water and the dust particles are not mixed, and hence the dust particles are made colloidal. As a result, sweeping is made difficult, thereby taking much time. In such a crushing operation, it is preferable not to generate dust particles in view of saving a cleaning operation and the improvement of hygienic conditions after the cleaning operation.

### SUMMARY OF THE INVENTION

A dust collector of the present invention can effectively collect small pieces and dust particles of concrete and/or stone generated when floors, walls ceilings, etc., made of concrete and/or stone are crushed. It is therefore an object of the present invention to provide a dust collector capable of collecting small pieces and dust particles by a vacuum suction machine without scattering them, thereby solving the problem of cleaning after the crushing operation, and also capable of keeping the hygienic environment.

To achieve the above object, the dust collector according to a first aspect of the invention comprises a bowl-shaped dust catching body having a large opening at one end thereof and a working port at another end thereof opposite to the large opening at a center of a bottom of the dust catching body, the working port permitting a crushing tool to move in the working port or move away from the working port, air closing means fixed to the working port for permitting the crushing tool to enter therethrough but for preventing air to flow therethrough, sealing means fixed to a periphery of the opening of the dust catching body, the sealing means being made of a flexible material and contacting a crushing operation surface, discharge means communicating with the dust catching body for sucking air inside the dust catching body, wherein the openings of the dust catching body and the negative pressure generation body are directed to and brought into contact with the crushing operation surface by way of the sealing means, thereby fixing the dust catching body to the crushing operation surface, and air in a space defined between the dust catching body and the crushing operation surface is sucked by the discharge means, thereby fixing the dust catching body to the crushing operation surface, and wherein dust generated when the crushing operating surface is crushed by the crushing tool inserted through the air closing means is discharged by the discharge means through the air introduction means.

The dust collector according to a second aspect of the invention comprises a bowl-shaped dust catching body having a large opening at one end thereof and a working port at another end thereof opposite to the large opening at a center of a bottom of the dust catching body, the working port permitting a crushing tool to move in the working port or move away from the working port, air closing means fixed to the working port for permitting the crushing tool to enter therethrough but for preventing air to flow therethrough, sealing means fixed to a periphery of the opening of the dust catching body, the sealing means being made of a flexible material and contacting a crushing operation surface, discharge means communicating with the dust catching body for sucking air inside the dust catching body, suction means having a shape of a sucker and made of a flexible material, the suction means having a large opening at one end thereof to contact a crushing operation surface, coupling means for coupling the suction means and the dust catching body, inlet means for sucking air inside the suction means to allow the dust suction means to be negatively pressurized, wherein the openings of the dust catching body and the negative pressure generation body are directed to and brought into contact with the crushing operation surface by way of the sealing means, and an internal space of the suction means is negatively pressurized by the inlet means so as to allow the suction means to be fixed to the crushing operation surface, thereby allowing the dust catching body to be maintained at the same position, and wherein air in a space defined between the dust catching body and the crushing operation surface is sucked by the discharge means, thereby discharging dust generated when the crushing operation surface is crushed by the crushing tool inserted through the air closing means through the discharge means.

The dust collector according to a third aspect of the invention comprises a bowl-shaped dust catching body having a large opening at one end thereof and a working port at another end thereof opposite to the large opening at a center of a bottom of the dust catching body, the working port permitting a crushing tool to move in the working port or move away from the working port, a bowl-shaped negative pressure generation body accommodating the dust catching body therein to form dual peripheral walls, the negative pressure generation body having a large opening at one end thereof, air closing means fixed to the working port for permitting the crushing tool to enter therethrough but for preventing air to flow therethrough, sealing means fixed to peripheries of the openings of the dust catching body and the negative pressure generation body, the dust sealing means being made of a flexible material and contacting a crushing operation surface, discharge means communicating with the negative pressure generation body for sucking air in a space between the dust catching body and the negative pressure generation body, air introduction means communicating with inner and outer surfaces of the dust catching body, thereby permitting air to flow through the inner and outer surfaces, wherein the openings of the dust catching body and the negative pressure generation body are directed to and brought into contact with the crushing operation surface by way of the sealing means, the dust catching body and the negative pressure generation body being fixed to the crushing operation surface when air in the space between the dust catching body and the negative pressure generation body is sucked by the discharge means, and wherein dust generated when the crushing operating surface is crushed by the crushing tool inserted through the air closing means is discharged by the discharge means through the air introduction means.

The dust collector according to a fourth aspect of the invention comprises a bowl-shaped dust catching body having a large opening at one end thereof and a working port at another end thereof opposite to the large opening at a center of a bottom of the dust catching body, the working port permitting a crushing tool to move in the working port or move away from the working port, a bowl-shaped negative pressure generation body accommodating the dust catching body therein to form dual peripheral walls, the negative pressure generation body having a large opening at one end thereof, air closing means fixed to the working port for permitting the crushing tool to enter therethrough but for preventing air to flow therethrough, sealing means fixed to peripheries of the openings of the dust catching body and the negative pressure generation body, the dust sealing means being made of a flexible material and contacting a crushing operation surface, discharge means communicating with the negative pressure generation body for sucking air in a space between the dust catching body and the negative pressure generation body, dust discharge means communicating with the dust catching body for sucking air inside the dust catching body, wherein the openings of the dust catching body and the negative pressure generation body are directed to and brought into contact with the crushing operation surface by way of the sealing means, the dust catching body and the negative pressure generation body being fixed to the crushing operation surface when air in the space between the dust catching body and the negative pressure generation body is sucked by the discharge means, and wherein dust generated when the crushing operating surface is crushed by the crushing tool inserted through the air closing means is discharged by the discharge means through the dust discharge means.

### BRIEF DESCRIPTION OF THE DRAWINGS

Fig. 1 is a plan view of a dust collector used at a construction site according to a first embodiment of the invention;
Fig. 2 is a cross sectional view taken along line 2-2 in Fig. 1, which shows a state where the dust collector is sucked to a wall surface;
Fig. 3 is an exploded perspective view of main components of the dust collector of Fig. 1;
Fig. 4 is a perspective view of a shutter sheet employed by the dust collector of Fig. 1;
Fig. 5 is a view for explaining an operation to bore a hole in the wall surface by an electrically-powered hammer using the dust collector of Fig. 1;
Fig. 6 is a plan view of a dust collector used at a construction site according to a second embodiment of the invention;
Fig. 7 is a cross sectional view taken along line 7-7 in Fig. 6, which shows a state where the dust collector is sucked to a wall surface;
Fig. 8 is an exploded perspective view of main components of the dust collector of Fig. 6;
Fig. 9 is a perspective view of an ejector employed by the dust collector of Fig. 6;
Fig. 10 is a view for explaining an operation to bore a hole in the wall surface using the dust collector of Fig. 6;
Fig. 11 is a plan view of a dust collector used at a construction site according to a third embodiment of the invention;
Fig. 12 is a cross sectional view taken along line 12-12 in Fig. 11, which shows a state where the dust collector is sucked to a wall surface;
Fig. 13 is an exploded perspective view of main components of the dust collector of Fig. 11;
Fig. 14 is a perspective view of a shutter sheet employed by the dust collector of Fig. 11; and
Fig. 15 is a view showing two shutter sheets which are combined and employed by the dust collector of Fig. 11.

### DETAILED DESCRIPTION

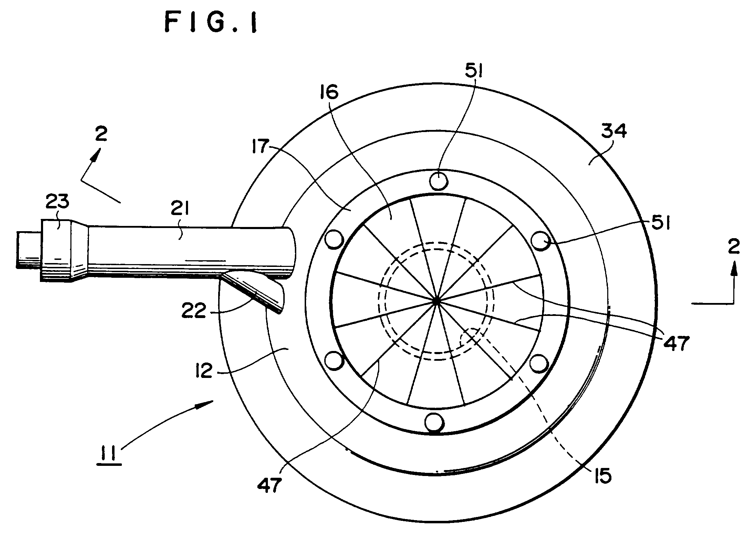

### First Embodiment (Figs. 1 through 5):

A first embodiment of the present invention will be now described with reference to Figs. 1 through 5.

As shown in Fig. 1, a suction body 12 which is a main component of the dust collector 11 has a shape of a metal basin in its external appearance, and an upper surface thereof corresponding to a bottom of the metal basin is circular and flat. A shutter sheet 16 serving as a circular air closing means is brought into contact with the circular upper surface of the suction body 12, and a thin ring-shaped retaining ring 17 made of thin metal is brought into and fixed to the upper surface of the shutter sheet 16 at its peripheral surface. A hollow inlet pipe 21 which serves as discharge means is coupled to the suction body 12 at its outer periphery. A central axis of the inlet pipe 21 is directed aslant to be deviated from the center of the suction body 12. A joint 23 is fixed to a distal end of the inlet pipe 21 so as to be coupled to a tip end of a bellowslike tube (described later). Further, an end of a hollow branched pipe 22, which serves as dust discharge means and has a small outer diameter, is coupled to the side surface of the linear inlet pipe 21 at a position close to the suction body 12. The branched pipe 22 is disposed to be aslant with the inlet pipe 21 while the axis of the former is aslant with that of the latter. The other end of the branched pipe 22 is inserted into the suction body 12 through an outer cover body 13 and communicates with a dual space formed (described later) inside the suction body 12. In such a manner, the inlet pipe 21 and the branched pipe 22 are coupled to each other in skewed relation, which represents an external appearance as if a handle of a frying pan were attached aslant to a frying pan body.

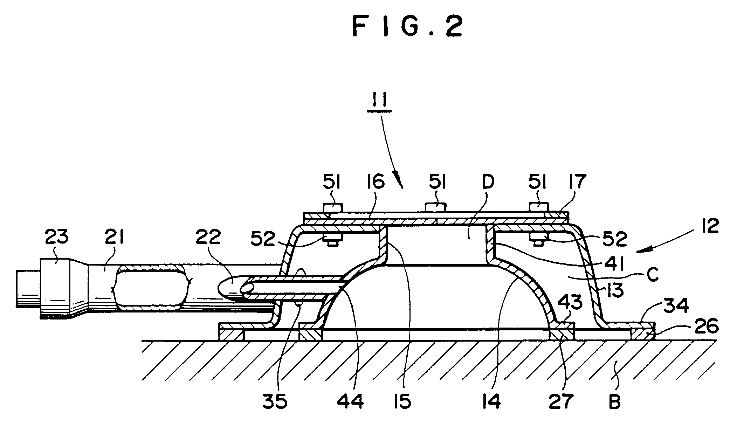

Fig. 2 is a cross sectional view of the suction body 12 which is cut vertically to show an internal structure of the suction body 12. The suction body 12 has a dual chambered internal structure in cross section as shown in Fig. 2, and comprises the outer cover body 13 for generating negative pressure and an internal isolating body 14 for catching dust. The outer cover body 13 has a shape like a metal basin which is turned upside down, and the internal isolating body 14 has a shape like a bowl which is turned upside down. The internal space of the outer cover body 13 is larger than the outer diameter of the internal isolating body 14. Even if the internal isolating body 14 is contained in the outer cover body 13, there is formed an appropriate gap between the outer cover body 13 and the internal isolating body 14. The upper surface (upper portion in Fig. 2), corresponding to the bottom of the metal basin, of the outer cover body 13 is flat and circular, and has a ring-shaped hole at the center thereof wherein the diameter of the hole is half of the diameter of the upper surface of the outer cover body 13. The periphery of the outer cover body 13 is curved to arc like a frame of a drum and the lower end (lower portion in Fig. 2) of the outer cover body 13 has a ring-shaped plane surface which is widened horizontally. A cushion ring 26, which is made of an elastic material such as a sponge and is formed like a ring serving as sealing means, is fixed to the lower end plane surface of the outer cover body 13. The lower surface of the cushion ring 26 contacts the wall surface B as shown in Fig. 2.

The internal isolating body 14 is bowl-shaped at its lower portion and cylindrical at its upper portion, and it is opened largely at the lower portion and also has a cylindrical opening at its upper end. The upper cylindrical opening serves as a working port 15. Accordingly, the internal isolating body 14 has a shape which is formed as if the bottom of a flask were cut to penetrate the flask vertically. The upper end of a cylindrical neck portion of the internal isolating body 14 is joined with the upper circular opening of the outer cover body 13. The internal isolating body 14 is hemispherical at its outer periphery and has a ring-shaped horizontally widened plane surface at its lower end. A cushion ring 27, which is made of an elastic material such as sponge and is formed like a ring serving as sealing means, is fixed to the lower end plane surface of the internal isolating body 14. The lower surface of the cushion ring 27 contacts the wall surface B as shown in Fig. 2.

The horizontally widened ring-shaped plane surface of the outer cover body 13 at the lower end and the horizontally widened ring-shaped plane surface of the internal isolating body 14 at the lower end are flush with each other. Accordingly, the plane surfaces of both cushion rings 26 and 27 are positioned at the same plane surface, and both cushion rings 26 and 27 can contact the wall surface B at the same time when the plane surfaces thereof contact the wall surface B, as shown in Fig. 2. Since the internal isolating body 14 is accommodated inside the outer cover body 13, the internal space of the outer cover body 13 is partitioned dual so that the interior of the outer cover body 13 is divided into a space C formed between the inner surface of the outer cover body 13 and the outer surface of the internal isolating body 14 and a space D formed inside the internal isolating body 14 when the cushion rings 26 and 27 contact the wall surface B.

The bottom of the outer cover body 13 has a flat ring-shaped plane surface with which the discoid shutter sheet 16 is brought into contact, and the ring-shaped retaining ring 17 is brought into contact with the upper surface of the shutter sheet 16 at its periphery. The retaining ring 17 is made of a thin metal plate and is formed by largely cutting the center of the thin metal plate in circular shape, thereby forming an opening. The retaining ring 17 and the upper surface of the outer cover body 13 are fastened by screws or bolts 51 so as to clamp the shutter sheet 16 from the upper and lower sides thereof and to fix the shutter sheet 16 between the retaining ring 17 and the outer cover body 13. The shutter sheet 16 is made of an elastic material such as vinyl or rubber having a substantially large thickness, and has a plurality of slits 47 formed by slitting it radially, namely, from the center toward the periphery thereof. The center of the slits 47 of the shutter sheet 16 is aligned with the center line of the working port 15 of the internal isolating body 14. The center of the shutter sheet 16 can be opened and closed elastically by the slits 47. It is possible to insert a drill or bit from the center of the slits 47. The inserted drill or bit is brought into contact with the members of the shutter sheet 16 which is divided into small pieces by the slits 47 at the periphery thereof so as to seal the shutter sheet 16 to prevent air from being escaped through the space D.

The tip end of the inlet pipe 21 communicates with the drum-shaped side surface of the outer cover body 13, and the tip end opening of the same serves as an inlet port 35 while the inlet pipe 21 and the space C inside the outer cover body 13 communicate with each other. The branched pipe 22 is coupled to the side surface of the inlet pipe 21 while directing aslant with respect the axial line of the inlet pipe 21 so that the side surface of the inlet pipe 21 communicates with one end of the branched pipe 22 so as to allow air to flow therethrough. The other end of the branched pipe 22 penetrates the side surface of the outer cover body 13 and also communicates with the side surface of the internal isolating body 14. The opening of the branched pipe 22 at the other end forms a inlet port 44, and the branched pipe 22 communicates with the space D inside the internal isolating body 14.

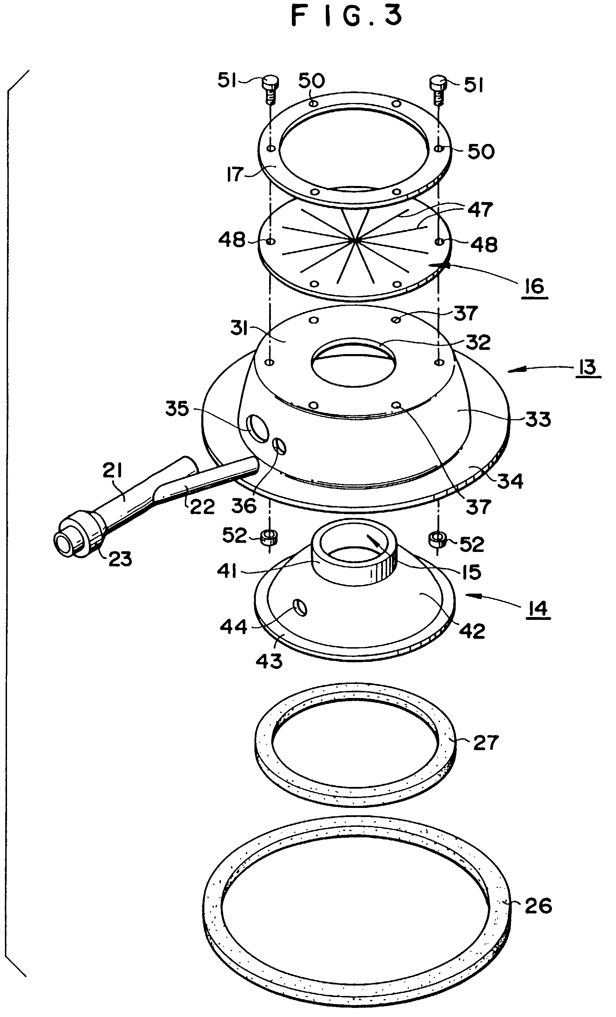

Each component constituting the dust collector 11 is exploded and the arrangement thereof will be described in detail with reference to Fig. 3.

The outer cover body 13 has a shape like a metal basin which is turned upside down, and the upper surface of the outer cover body 13 corresponding to the bottom of the metal basin forms a ring portion 31 which is circular and has an opening 32 defined at its center. The inner diameter of the opening 32 is about half of the outer diameter of the ring portion 31, and the ring portion 31 has a flat and ring-shaped configuration. Screw holes 37 are bored on the ring portion 31 at the periphery thereof in an equal interval. A cylindrical barrel portion 33, which is swollen downward, is continued from the outer periphery of the ring portion 31. The barrel portion 33 corresponds to the peripheral surface of the metal basin. The barrel portion 33 has an outer diameter which is enlarged downward and curved as shown in Fig. 3, and the lower end peripheral edge thereof is coupled to a horizontally ring-shaped pressure portion 34. The pressure portion 34 corresponds to the edge portion of the metal basin. The circular inlet port 35 is formed by penetrating the side surface of the barrel portion 33, and an air introduction port 36 is formed by penetrating the barrel portion 33 at a position close to the inlet port 35.

The internal isolating body 14 is accommodated in the internal space of the outer cover body 13, and the external appearance of the internal isolating body 14 has a shape formed by cutting the lower half portion of a flask. A cylindrical neck portion 41 formed at the upper portion of the internal isolating body 14 has a central opening which corresponds to the working port 15 as shown in Fig. 2. A skirt portion 42 is continued from and connected to the lower portion of the neck portion 41, and it has a shape like the bowl which is turned upside down and it is curved to arc downward. A pressure portion 43 is coupled to the circular peripheral edge of the widened lower end of the skirt portion 42, and it forms a horizontally widened ring shape. The inlet port 44 is defined at the side surface of the skirt portion 42 so as to be coupled to the branched pipe 22 thereto.

The outer cover body 13 and the internal isolating body 14 are respectively formed of a material such as FRP or reinforcing plastics or thin aluminum. The outer cover body 13 and the internal isolating body 14 are assembled by inserting the opening 32 into the upper end of the neck portion 41 and applying an adhesive between the upper end outer periphery of the neck portion 41 and the inner periphery of the opening 32, thereby coupling the outer cover body 13 and internal isolating body 14. In such a manner, the internal isolating body 14 is accommodated in and fixed to the internal space of the outer cover body 13, so that they are assembled as the suction body 12, and hence the dual space is partitioned inside the outer cover body 13 as shown in Fig. 2. In a state where the outer cover body 13 and the internal isolating body 14 are assembled, the lower surface of the pressure portion 34 and that of the pressure portion 43 are flush with each other, namely, positioned on the same plane surface.

The tip end of the inlet pipe 21 is engaged with the inlet port 35 defined in the side surface of the outer cover body 13, and an adhesive is applied between the inner periphery of the inlet port 35 and the outer periphery of the tip end of the inlet pipe 21 so that the inlet pipe 21 is coupled to the inlet port 35. At the same time when the inlet pipe 21 is engaged with the inlet port 35, the branched pipe 22 is inserted into the air introduction port 36, then it is further inserted into the interior of the outer cover body 13, and the tip end of the branched pipe 22 is engaged with the inner periphery of the inlet port 44. Thereafter, the adhesive is applied between the outer periphery of the tip end of the branched pipe 22 and the inner periphery of the inlet port 44 so as to fix the branched pipe 22 to the inlet port 44. Meanwhile, one end of the branched pipe 22 is fixed to the side surface of the inlet pipe 21 in advance so as to form a Y-shaped branched configuration, while the branched pipe 22 and the inlet pipe 21 communicate with each other so as to allow air to flow therebetween.

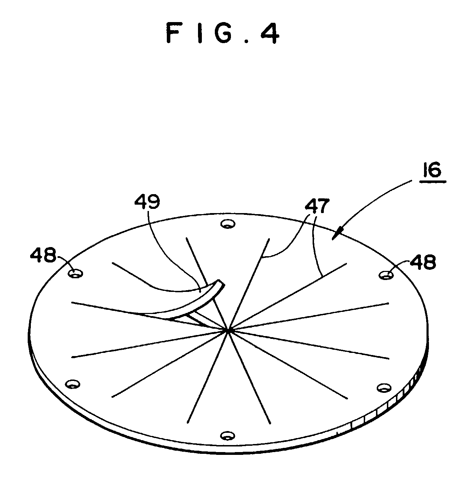

The arrangement of the shutter sheet 16 will be now described with reference to Fig. 4. The shutter sheet 16 is discoid and made of an elastic material such as a vinyl plate or a rubber plate having a substantially large thickness. The outer diameter of the shutter sheet 16 is substantially the same as that of the ring portion 31. The shutter sheet 16 is slit straight radially from the center toward the periphery thereof to form a plurality of slits 47. Each terminal end of the slits 47 is extended to a position close to the circumferential edge of the shutter sheet 16. The shutter sheet 16 seems to be a lemon cut in round slices. When the slits 47 are formed radially from the center of the shutter sheet 16, elastic triangle pieces 49 comprising a plurality of closing small pieces each having isosceles triangles are separated at the center of the shutter sheet 16. Since the material of the shutter sheet 16 is the vinyl plate or the rubber plate, each separated elastic triangle piece 49 can be bent upward or downward with restoring force (see a state where the elastic triangle piece 49 is bent upward in Fig. 4). Since each elastic triangle piece 49 can be elastically bent while the base of the triangle is coupled to the periphery of the shutter sheet 16, when a drill or bit is inserted into the center line of the slits 47, the shutter sheet 16 allows the drill or bit to enter therethrough without any resistance because each elastic triangle piece 49 can be bent in the inserting direction of the drill or bit. Further, since each elastic triangle piece 49 has a restoring force, it is brought into contact with the periphery of the drill or bit so as to seal the suction body 12 in order to prevent air from being leaked outside. A plurality of screw holes 48 are bored at the periphery of the shutter sheet 16 in a given interval by penetrating it vertically.

The retaining ring 17 is made of a thin metal material, and has an outer diameter which is substantially the same as that of the shutter sheet 16. The retaining ring 17 has a large opening at the center thereof. Accordingly, the retaining ring 17 has a large diameter ring-shaped configuration while the width between the inner and outer diameters thereof is small. A plurality of screw holes 50 are bored on the retaining ring 17 at the periphery thereof in a given interval by penetrating it vertically.

In order to attach the shutter sheet 16 and the retaining ring 17 to the suction body 12, the shutter sheet 16 is brought into contact with the upper surface of the ring portion 31, then the retaining ring 17 is brought into contact with the upper surface of the shutter sheet 16, successively screw holes 37, 48 and 50 are aligned with one another. Thereafter, bolts 51 are sequentially inserted into the screw holes 50, 48 and 37 in this order from the upper portion of the retaining ring 17 so as to protrude the lower ends of the bolts 51 from the lower surface of the ring portion 31. Then, nuts 52 are screwed into the bolts 51 from the back side of the ring portion 31, thereafter the nuts 52 are fastened so that the shutter sheet 16 and the retaining ring 17 can be fixed to the ring portion 31. As a result, the upper and lower surfaces of the shutter sheet 16 are clamped by and fixed to the retaining ring 17 and the ring portion 31, and the central portion of the shutter sheet 16 is opened by the opening formed in the center of the retaining ring 17, and hence it is exposed to the outside.

The cushion rings 26 and 27 are made of a material such as sponge or foaming rubber, and it is elastic and has a restoring performance. The cushion ring 26 has a ring shape and has an outer diameter which is substantially the same as that of the pressure portion 34, and it is airtightly fixed to the lower surface of the pressure portion 34 by way of an adhesive, etc. Likewise, the cushion ring 27 has a ring shape and has an outer diameter which is substantially the same as that of the pressure portion 43, and it is airtightly fixed to the lower surface of the pressure portion 43 by way of the adhesive, etc. Since the cushion rings 26 and 27 are elastic when the pressure portions 34 and 43 are pressed against the wall surface B, they are brought into contact with the wall surface B, and hence they are deformed along the shape of the wall surface B owing to its elasticity. As a result, air is prevented from being leaked out from the internal space between the outer cover body 13 and the internal isolating body 14.

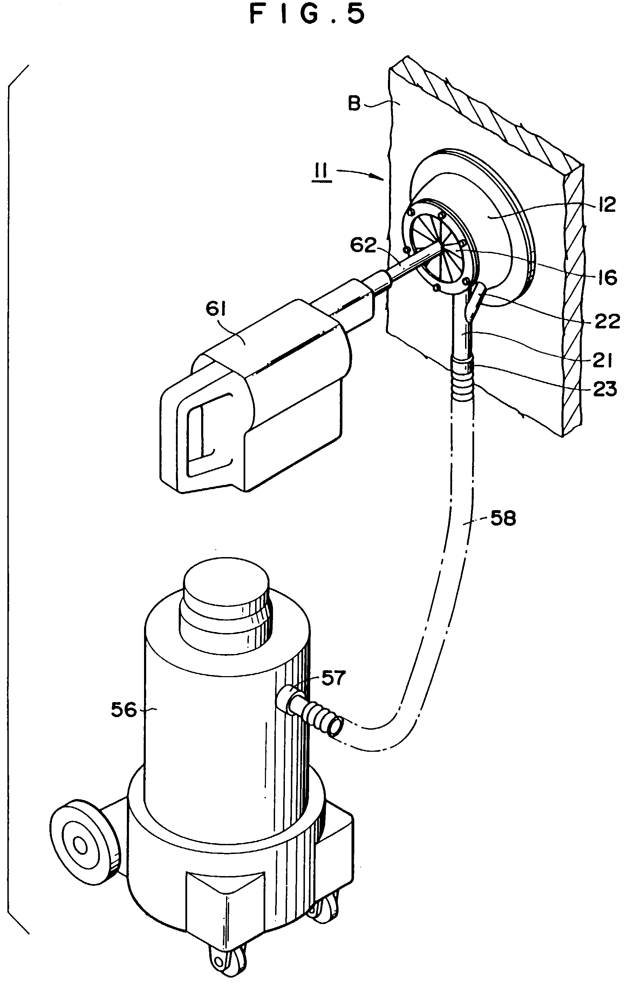

The operation to actually crush the wall surface B made of concrete using the thus assembled dust collector 11 will be now described with reference to Fig. 5.

The dust collector 11 is installed on the wall surface B made of concrete (e.g., the inside of a completed building or a body of the building) at a position where a hole is intended to be bored in the wall surface B. In this installation, the center of the shutter sheet 16 of the dust collector 11 (center of the slits 47) is aligned with the hole to be bored. The cushion ring 26 of the outer cover body 13 and the cushion ring 27 of the internal isolating body 14 are respectively brought into contact with the wall surface B. Thereafter, an end of a communicating hose 58 is coupled to the opening of the joint 23 while the other end of the communicating hose 58 is coupled to a pipe 57 provided in a vacuum suction machine 56. The vacuum suction device 56 has a suction pump which is driven by an electrically-powered motor accommodated therein and also has a dust collecting bag capable of separating dust from air, and it has the same structure as the conventionally well known vacuum cleaner. The vacuum suction device 56 is usually used as a cleaner, namely, if a hose is connected to the pipe 57 of the vacuum suction device 56, it can be used as a cleaner for sucking dust on the floor. The dust sucked through the pipe 57 is caught by the dust collecting bag formed by paper or cloth.

When the vacuum suction device 56 is operated, air is sucked from the inlet pipe 21 toward the vacuum suction device 56 through the pipe 57 and the communicating hose 58 so that air inside the dust collector 11 can be discharged, and hence the pressure inside the dust collector 11 is kept lower than the atmosphere. That is, as shown in Fig. 2, air is always sucked toward the vacuum suction device 56 through the inlet pipe 21, the inlet port 35 at the tip end opening of the branched pipe 22, and the inlet port 44 so as to keep the air inside the spaces C and D to be under negative pressure. When the air is discharged, since the space C is partitioned by the outer cover body 13 and the internal isolating body 14, and the opening at the lower portion thereof (the side brought into contact with the wall surface B) is airtightly brought into contact with the wall surface B by the cushion rings 26 and 27, the space C becomes a doughnut-shaped closed space in which fresh air is not introduced. Since the space C is airtightly closed from the outside and air is discharged from the inlet port 35, the atmospheric pressure presses the outer surface of the outer cover body 13 so that it fixes the outer cover body 13 (i.e. the entire dust collector 11) to the wall surface B so as to prevent the outer cover body 13 from coming off the wall surface B. Accordingly, the entire dust collector 11 is kept on the wall surface B and it does not come off the wall surface B while it is installed at the initial position. The dust collector 11 remains sucked to the wall surface B while the vacuum suction device 56 is operated to keep the negative pressure inside the space C.

The tip end of a bit 62 attached to the an electrically-powered hammer 61 is inserted into the center of the shutter sheet 16 while the dust collector 11 is sucked to the wall surface B (the bit 62 is made of super hard alloy and it moves back and forth strongly when the electrically-powered hammer 61 is driven, thereby boring a hole in the wall surface B made of concrete). When the electrically-powered hammer 61 is inserted into the shutter sheet 16, each elastic triangle piece 49 partitioned by the slits 47 is bent owing to its elasticity, and hence it does not prevent the bit 62 from entering the shutter sheet 16, namely, it permits the bit 62 to enter the shutter sheet 16. Accordingly, the tip end of the bit 62 can contact the wall surface B at the position inside the internal isolating body 14 as shown in Fig. 2. After the bit 62 is inserted, each elastic triangle piece 49 is brought into contact with the side surface of the bit 62 owing to its elasticity so as to restrain fresh air from entering into the space D, thereby preventing the pressure inside the space D from being increased. When the electrically-powered hammer 61 is driven after the bit 62 is inserted into the shutter sheet 16, the bit 62 strikes against the wall surface B with strong impact force so as to bore a hole having a given diameter. When the bit 62 bores the hole in concrete, broken pieces or dust particles of concrete are peeled off from the wall surface B and collect inside the space D. At this time, since the vacuum suction device 56 is operated to suck the air inside the space D by way of the inlet port 44 to thereby maintain the space D under negative pressure, the peeled off broken pieces or dust particles are sucked into the vacuum suction device 56 together with the air through the branched pipe 22, the inlet pipe 21, the communicating hose 58 and the pipe 57 in this order. When the air in the space D is sucked, the space D is short of air but new air is introduced inside the space D through the slits 47. As a result, the insufficient air is replaced by the introduced fresh air.

Since the dust collecting bag made of paper and cloth is accommodated in the vacuum suction device 56, air sucked through the pipe 57 is passed through and discharged from the dust collecting bag and broken pieces and dust particles are caught by the dust collecting bag. Accordingly, although the broken pieces and dust particles of concrete are generated when the hole is bored in the wall surface B by the bit 62, they are generated inside the internal isolating body 14 which is closed from the outside and under negative pressure and hence they are not scattered outside the dust collector 11. The broken pieces or dust particles are sucked by the vacuum suction device 56 and separated from the air by the dust collecting bag so that only the pure air is discharged by the vacuum suction device 56 and the broken pieces and dust particles are not scattered outside. As mentioned above, since the generation and catching of the broken pieces and dust particles are carried out inside the space which is isolated and closed from the outside, the broken pieces or dust particles are not scattered at the periphery of the working site where the wall surface B is crashed, and hence the working can be performed under a clean environment.

When the hole is bored in the wall surface B by the bit 62 while the vacuum suction device 56 is driven, even if air enters the space D from gaps of the slits 47, air, broken pieces and dust particles inside the shutter sheet 16 are not discharged outside but flows toward the vacuum suction device 56 through the inlet port 44 and then collected. After the bit 62 bores the hole or defines the opening in the wall surface B during the crushing operation, the electrically-powered hammer 61 and the bit 62 are pulled upward in Fig. 5, and the bit 62 is extracted from the shutter sheet 16. When the bit 62 is extracted from the shutter sheet 16, each elastic triangle piece 49 which is partitioned by the slits 47 is returned to its original position owing to its own elasticity and restored to a flat shape, thereby preventing the fresh air from entering the space D. When the operation of the vacuum suction device 56 is stopped thereafter, the suction of air inside the space C is stopped so that negative pressure generated in the space C is lost so that pressure for pressing the dust collector 11 by the atmosphere is lost or released. As a result, the suction force of the dust collector 11 to the wall surface B is released, the dust collector 11 can be moved away from the wall surface B and it can be moved to a next crushing position on the wall surface B.

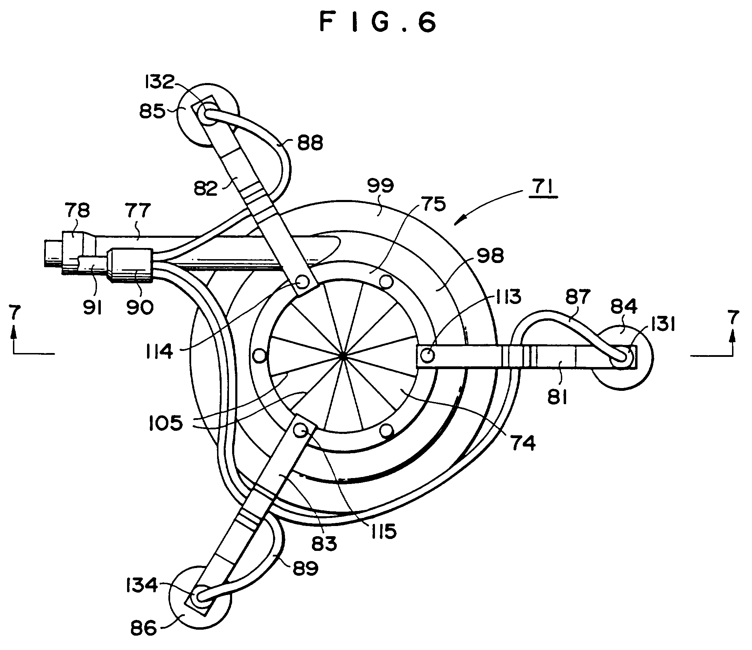

### Second Embodiment (Figs. 6 through 10):

A dust collector according to a second embodiment of the invention will be now described with reference to Figs. 6 through 9.

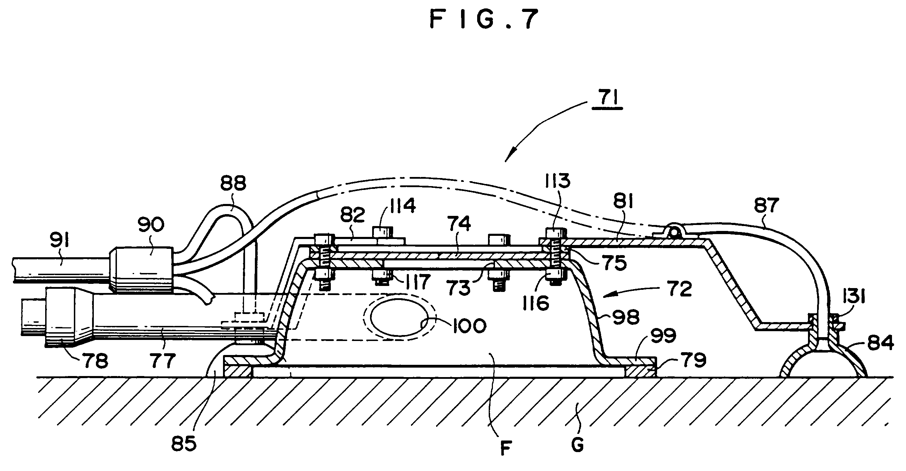

A cover body 72 which is a main component of the dust collector 71 has not a dual structure like the first embodiment but it is structured to have a single space. As shown in Figs. 6 and 7, the cover body 72 has a shape like a metal basin which is turned upside down in its external appearance, and the upper surface thereof corresponding to the bottom of the metal basin is circular and flat. A shutter sheet 74 serving as circular air closing means is brought into contact with the circular upper surface of the cover body 72. A ring-shaped retaining ring 75 made of thin metal is brought into and fixed to the periphery of the upper surface of the shutter sheet 74. A hollow air inlet pipe 77 serving as air discharge means is coupled to the outer periphery of the cover body 72. The central axis of the air inlet pipe 77 is directed aslant to deviate from the center of the cover body 72. A joint 78 is fixed to the distal end of the air inlet pipe 77 so as to be coupled to a tip end of a bellowslike tube (described later). In such a manner, the inlet pipe 77 is coupled to the side surface of the cover body 72 in skewed relation, which represents an external appearance like a handle of a frying pan which is attached aslant to a frying pan body.

Each end of suction legs 81, 82 and 83 serving as metal coupling means is fixed to the upper surface of the retaining ring 75 at three equally spaced positions, and each of the suction legs 81, 82 and 83 is disposed outward radially as shown in Fig. 6. These suction legs 81, 82 and 83 are formed of belt-shaped thin metal pieces and other ends thereof are directed to the opening of the cover body 72, and also they are respectively fixed to suction cups 84, 85 and 86. The suction cups 84, 85 and 86 are respectively coupled to each one end of suction hoses 87, 88 and 89. The suction hoses 87, 88 and 89 are hollow and tubular so as to permit air therein. Other ends of the suction hoses 87, 88 and 89 are collected to be coupled to a convergent unit 90. The convergent unit 90 is coupled to a joint 91 to be coupled to a bellowslike hose (described later).

Fig. 7 shows an internal structure of the dust collector 71 which is a cross sectional view taken along line 7-7 in Fig. 6. The cover body 72 has a shape like a metal basin which is turned upside down and is circular and flat at the upper surface thereof corresponding to a bottom of the metal basin (upper portion in Fig. 7). The cover body 72 has a ring-shaped opening defined at the center thereof having a diameter which is half of that of the bottom. The periphery of the outer cover body 72 is curved like a frame of a drum and the lower end (lower portion in Fig. 7) of the outer cover body 72 has a ring-shaped plane surface which is widened horizontally. A cushion ring 79, which is made of an elastic material such as a sponge and is formed like a ring serving as sealing means, is fixed to the lower end plane surface of the outer cover body 72. The lower surface of the cushion ring 79 contacts the wall surface G as shown in Fig. 7. In a state where the cushion ring 79 contacts the wall surface G, a space F isolated from the outside is formed inside the cover body 72.

An inlet port 100 is defined in the side surface of the cover body 72 and positioned at the height which is half of the thickness of the cover body 72 for communicating with the inside and outside of the cover body 72. An end of the air inlet pipe 77, which is circular in cross section is inserted into the inlet port 100 and they are airtightly coupled to each other by applying an adhesive therearound. The inlet port 100 is opened elliptically. The air inlet pipe 77 is inserted into the inlet port 100 at its end and positioned at the peripheral surface of the cover body 72 while the axial line of the former is aslant. As a result, the air inlet pipe 77 can communicate with the space F inside the cover body 72. The air inlet pipe 77 communicates with the vacuum suction device and is hollow so as to permit air to flow therebetween. The other end of the air inlet pipe 77 is coupled to a joint 78 to be coupled to a bellowslike hose (described later).

The cover body 72 has a flat and ring-shaped plane surface at the bottom thereof in which a working port 73 is defined. The discoid shutter sheet 74 is brought into contact with the flat and ring-shaped plane surface and a ring-shaped retaining ring 75 is brought into contact with the upper surface of the shutter sheet 74 at the periphery thereof. The retaining ring 75 is formed by largely and circularly cutting the center of the thin metal plate. The lower surface of one end of each suction leg 81, 82 and 83 contacts the upper surface of the retaining ring 76 (the suction leg 83 is not shown since it is positioned at this side in Fig. 7). Bolts 113, 114 and 115 are respectively inserted into the retaining ring 75, the shutter sheet 74 and the cover body 72 through the suction legs 81, 82 and 83, then nuts 116, 117 and 118 are screwed into the lower ends of the bolts 113, 114 and 115 so as to fasten the retaining ring 75, the shutter sheet 74 and the cover body 72 between the bolts 113, 114 and 115 and the nuts 116, 117 and 118, whereby the shutter sheet 74 can be clamped between the retaining ring 75 and the cover body 72 so as to be fixed to the cover body 72. As a result, the upper and lower surfaces of the shutter sheet 74 are clamped between the retaining ring 75 and a ring portion 96 and fixed therebetween, and the central opening of the shutter sheet 74 is opened by the opening defined in the center of the retaining ring 75 and exposed to the outside.

The shutter sheet 74 is discoid and made of an elastic material such as vinyl or rubber having a large thickness, and has a plurality of slits 105 formed by slitting it radially, namely, from the center toward the periphery thereof. The center of the slits 105 of the shutter sheet 74 is aligned with the center line of the working port 73. The center of the shutter sheet 74 can be opened and closed elastically by the slits 105. It is possible to insert a drill or bit from the center of the slits 105. The inserted drill or bit is brought into contact with the members of the shutter sheet 74 which is divided into small pieces by the slits 105 at the periphery thereof so as to seal the shutter sheet 74 to prevent air from being escaped through the space F.

The suction legs 81, 82 and 83 are formed of belt-shaped thin metal pieces and are bent twice to represent substantially Z shapes when viewed from the sides thereof as shown in Fig. 7. One end of each suction leg 81, 82 and 83 is respectively brought into contact with the upper surface of the retaining ring 75 and the other end thereof extends radially, and the lower surface of the other end thereof is respectively fixed to suction cups 84, 85 and 86. The suction cups 84, 85 and 86 are respectively made of a flexible material such as rubber and has a shape like a bowl which is turned upside down. The suction cups 84, 85 and 86 have large openings which are directed downward and are fixed to the suction legs 81, 82 and 83 at their bottoms. Accordingly, the suction cups 84, 85 and 86 represent suckers in cross section, and hence they can be sucked to the wall surface G. The opening ends of the suction cups 84, 85 and 86 are flush with the plane surface of the cushion ring 79 as shown in Fig. 7.

The suction cups 84, 85 and 86 are respectively coupled to one end of suction hoses 87, 88 and 89. The suction hoses 87, 88 and 89 have hollow tubular shapes and are collected at their other ends to be coupled to the convergent unit 90. The convergent unit 90 is hollow and communicates with distal end openings of the suction hoses 87, 88 and 89 so as to permit air to flow uniformly therebetween. The convergent unit 90 is coupled to a joint 91 so as to be coupled to a bellowslike hose (described later).

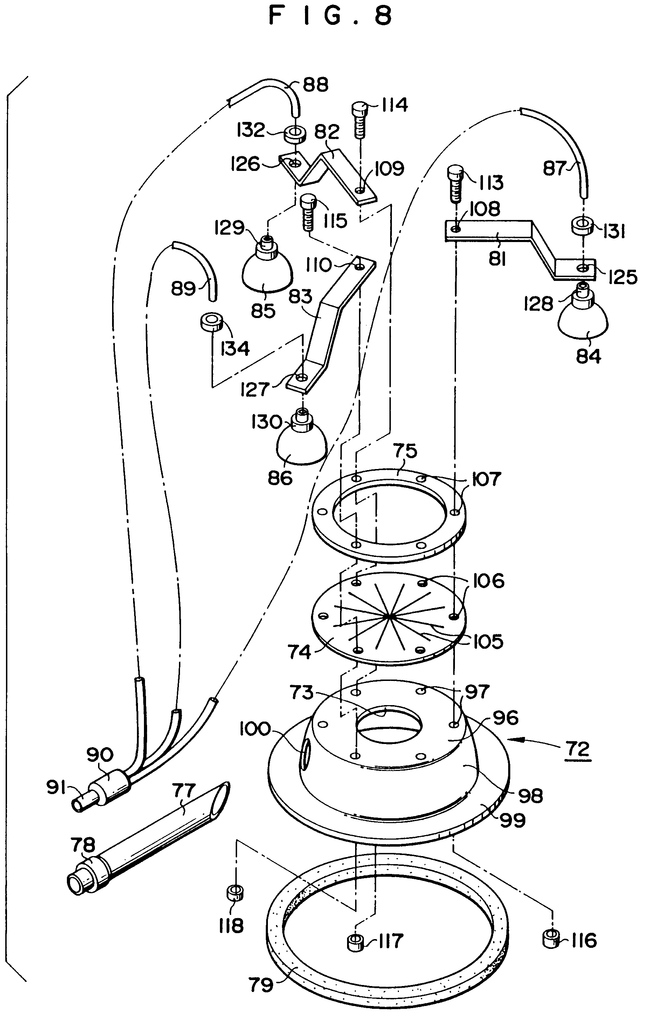

The arrangement of each component constituting the dust collector 71 will be now described more in detail with reference to Fig. 8.

The cover body 72 which is a main component of the dust collector 71 has a shape like a bowl which is turned upside down and made of a material such as FRP, reinforced plastics or thin aluminum. The upper surface of the cover body 72 corresponding to the bottom of the metal basin forms a flat ring portion 96. The outer periphery of the ring portion 96 is circular and has the working port 73 defined by penetrating the center thereof. The inner diameter of the working port 73 is about half of the outer diameter of the ring portion 96, and the ring portion 96 has a flat and ring-shaped configuration. Screw holes 97 are bored in the ring portion 96 at the periphery thereof in an equal interval. A barrel portion 98, which is swollen downward and curved, is continued from the outer periphery of the ring portion 96. The barrel portion 98 corresponds to the peripheral surface of the metal basin. The barrel portion 98 is swollen so as to be increased in its diameter as it directs downward, and has the lower end peripheral edge thereof coupled to a horizontally widened ring-shaped pressure portion 99. The pressure portion 99 corresponds to the edge portion of the metal basin. The elliptical inlet port 100 is formed by penetrating the side surface of the barrel portion 98. The ring portion 96, the barrel portion 98 and the pressure portion 99 are formed by an injecting molding machine to be integrated with one another.

A tip end of the inlet pipe 77 is engaged with the inlet port 100 defined in the side surface of the cover body 72, and an adhesive is applied between the inner periphery of the inlet port 100 and the tip end outer peripheral surface of the suction pipe 21 so as to bond airtightly the suction pipe 77 to the inlet port 100. The ring-shaped cushion ring 79 is brought into contact with and fixed to the annular lower surface of the pressure portion 99. The cushion ring 79 is made of an elastic material such as a sponge or a foaming rubber and has inner and outer diameter which are substantially the same as those of the pressure portion 99.

The shutter sheet 74 is discoid and has the same shape as the shutter sheet 16 as set forth in Fig. 4 and is made of an elastic material such as a vinyl plate or a rubber plate having a large thickness. The shutter sheet 74 is slit radially from the center toward the outer periphery to form a plurality of slits 105 and it is separated into a plurality of triangular small pieces. Screw holes 106 are bored in the shutter sheet 74 at the periphery thereof. The retaining ring 75 is formed by punching a thin metal plate, and has a ring-shaped configuration having a large diameter. The outer diameter of the retaining ring 75 is set to be substantially the same as that of the shutter sheet 74. Screw holes 107 are bored in the retaining ring 75 at the periphery thereof in an equal interval.

The suction legs 81, 82 and 83 to be fixed to the upper peripheral portion of the cover body 72 have the same shapes and are formed by alternately bending long and narrow belt-shaped plates. That is, the belt-shaped thin metal piece is bent alternately at a position one third of the entire length in different directions from the front and rear so as to form a deformed Z-shape as if it were slightly extended. The suction legs 81, 82 and 83 have screw holes 108, 109 and 110 respectively bored at one end thereof and insertion holes 125, 126 and 127 respectively bored at the other end thereof.

In order to fix the shutter sheet 74, the retaining ring 75, and the suction legs 81, 82 and 83 to the cover body 72, the lower surface of the shutter sheet 74 is brought into contact with the upper surface of the ring portion 96, and the lower surface of the retaining ring 75 is brought into contact with the outer periphery of the upper surface of the shutter sheet 74, and the lower surfaces of one end of the suction legs 81, 82 and 83 are brought into contact with the upper surface of the retaining ring 75. Thereafter, the bolt 113 is inserted into the screw holes 108, 107, 106 and 97, then the nut 116 is screwed into the tip end of the bolt 113 which protrudes from the back surface of the cover body 72, thereby fastening the bolt 113. Likewise, the bolt 114 is inserted into the screw holes 109, 107, 106 and 97, then the nut 117 is screwed into the tip end of the bolt 114 which protrudes from the back surface of the cover body 72, thereby fastening the bolt 114. Still likewise, the bolt 115 is inserted into the screw holes 110, 107, 106 and 97, then the nut 118 is screwed into the tip end of the bolt 115 which protrudes from the back surface of the cover body 72, thereby fastening the bolt 115. In such a manner, when the bolts 113, 114 and 115 and the nuts 116, 117 and 118 are fastened with one another, the shutter sheet 74, the retaining ring 75, the suction legs 81, 82 and 83 are respectively fixed to the upper surface of the cover body 72 so that the suction legs 81, 82 and 83 can be disposed in such a manner that they extend radially from the center of the ring portion 96 in three directions.

The suction cups 84, 85 and 86 are respectively made of a flexible material such as rubber and have large openings at the lower portions at the lower portions and have shapes like bowls, i.e., so-called suckers. A hollow attaching pipe 128 projects from the top of the suction cup 84 corresponding to the bottom of the bowl and it communicates with the internal space of the suction cup 84 so as to permit air to flow therethrough. Likewise, a hollow attaching pipe 129 projects from the top of the suction cup 85 corresponding to the bottom of the bowl and it communicates with the internal space of the suction cup 85 so as to permit air to flow therethrough. Still likewise, a hollow attaching pipe 130 projects from the top of the suction cup 86 corresponding to the bottom of the bowl and it communicates with the internal space of the suction cup 86 so as to permit air to flow therethrough. In order to fix the suction cups 84, 85 and 86 to the suction legs 81, 82 and 83, the attaching pipes 128, 129 and 130 are inserted into the insertion holes 125, 126 and 127, then fixing nuts 131, 132 and 134 are screwed into the tip ends of the inserted attaching pipes 128, 129 and 130.

When the suction cups 84, 85 and 86 and are fixed to the suction legs 81, 82 and 83, the attaching pipes 128, 129 and 130 project respectively from the upper surfaces of the suction legs 81, 82 and 83 at their other ends. One end of the inlet hoses 87, 88 and 89 are coupled to the attaching pipes 128, 129 and 130. The other ends of the inlet hoses 87, 88 and 89 are collected to communicate with the convergent unit 90. The convergent unit 90 is hollow and communicates with terminal end openings of the suction hoses 87, 88 and 89 so that air flowing from the suction hoses 87, 88 and 89 are mixed in the convergent unit 90. The tip end of the inlet pipe 77 is inserted into the inlet port 100 which is defined by penetrating the side surface of the barrel portion 98 of the cover body 72, and an adhesive is applied between the inner peripheral surface of the inlet port 100 and the tip end outer periphery of the inlet pipe 77 so that the inlet pipe 77 can be airtightly fixed to the barrel portion 98.

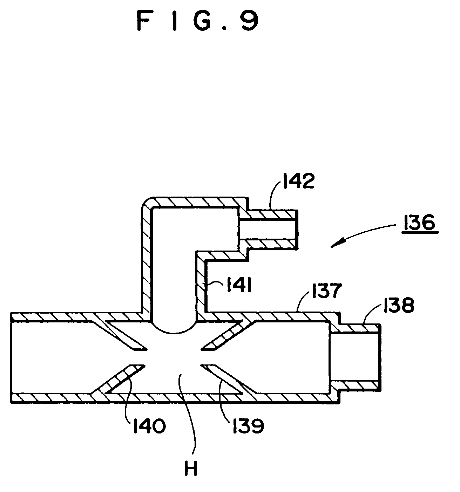

Fig. 9 shows an internal structure of an ejector 136 for generating negative pressure for sucking air from the joint 91 and the convergent unit 90.

The ejector 136 comprises a body pipe 137 constituting the main portion thereof which is hollow and pipe-shaped and is opened at both ends thereof. A coupling pipe 138 to be coupled to a bellows, etc., is coupled to one end of the body pipe 137 (right side in Fig. 9). Throttling bodies 139 and 140 are fixed to the inner central portion of the body pipe 137 in a given interval for forming narrow central openings or bores. A space H for generating negative pressure is provided between the throttling bodies 139 and 140. A lateral pipe 141 is coupled to the side surface of the body pipe 137 between the throttling bodies 139 and 140 in a direction perpendicular to the body pipe 137. A coupling pipe 142 which is bent in an L shape is coupled to the other end of the lateral pipe 141. Accordingly, the terminal end opening of the coupling pipe 142 and the space H of the body pipe 37 communicate with each other so as to permit air to flow therebetween.

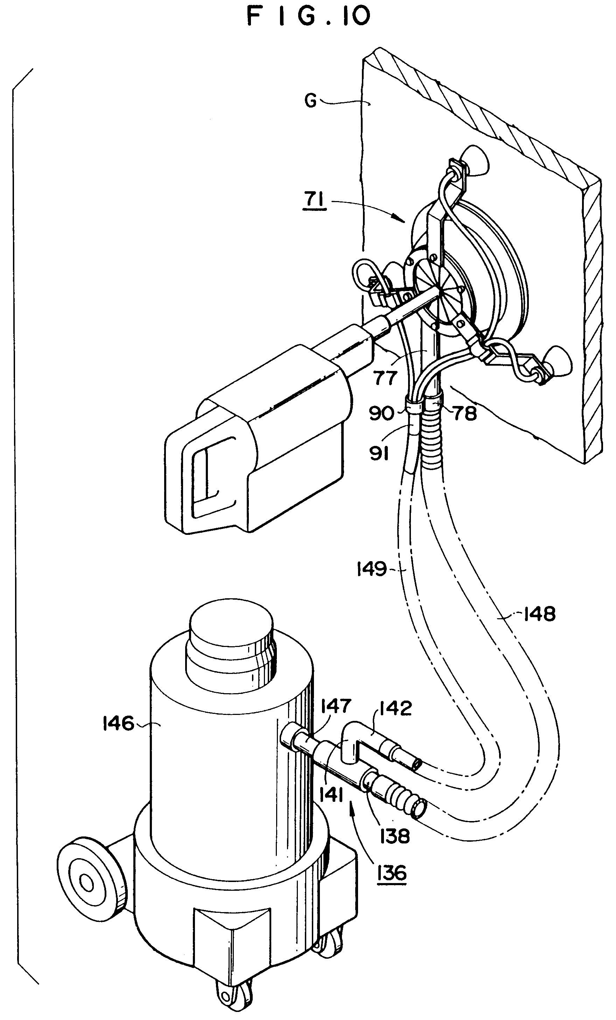

A crushing operation using the dust collector 71 will be now described with reference to Fig. 10.

The dust collector 71 is installed on the wall surface G at a position where a hole is intended to be bored in the wall surface G. In this installation, the center of the shutter sheet 74 of the dust collector 71 (center of the slits 105) is aligned with the hole to be bored. The plane surface of the cushion ring 79 of the outer cover body 72 and the openings of the suction cups 84, 85 and 86 are respectively brought into contact with the wall surface G at the same time. Thereafter, an end of a bellowslike communicating hose 148 for permitting air to flow therein is coupled to the joint 78 while the other end of the communicating hose 148 is coupled to the coupling pipe 138 provided in the ejector 136. The bellowslike suction hose 149 through which air is circulated is coupled to the joint 91 at one end thereof and also coupled to the coupling pipe 142 of the ejector 136 at the other end thereof. Further, the other opening of the ejector 136 is coupled to a coupling pipe 147 which protrudes toward a vacuum suction device 146 so that the vacuum suction device 146 sucks air from the outside. The vacuum suction device 146 is a conventional one to be used generally in a cleaning operation and is capable of sucking air therein through the coupling pipe 147 when the motor accommodated therein is actuated. The vacuum suction device 146 accommodates therein a dust collecting bag made of cloth or paper so as to catch dust from the air which is sucked through the coupling pipe 147.

The vacuum suction device 146 is operated when the motor is actuated so as to suck air from the coupling pipe 147 toward the inside thereof, air inside the space F of the cover body 72 is sucked through the inlet pipe 77, the joint 78, the communicating hose 148 and the ejector 136. When the air circulates in the ejector 136, the air is passed at high speed through the small diameter portion between the throttling bodies 139 and 140 provided in the ejector 136. As a result, when the air flows at high speed, the ambient air is involved in the space H and is sucked, thereby negatively pressurizing the inner pressure of the space H. Since the space H is negatively pressurized, the ambient air is sucked in a manner that it is involved by the air flowing at high speed at the center of the ejector 136, thereby generating the sucking operation to suck the air through the coupling pipe 142 and the lateral pipe 141.

As a result, the air is sucked through the joint 91 and the convergent device 90 through the suction hose 149 coupled to the coupling pipe 142, so that the air is sucked through each of the suction hoses 87, 88 and 89 coupled to the convergent device 90. When the air is sucked through one end of the inlet hose 87, the air inside the internal space of the suction cup 84 is discharged by way of the attaching pipe 128 coupled to the other end of the suction cup 84. Likewise, when the air is sucked through one end of the inlet hose 88, the air inside the internal space of the suction cup 85 is discharged by way of the attaching pipe 129 coupled to the other end of the suction hose 88. Still likewise, when the air is sucked through one end of the inlet hose 89, the air inside the internal space of the suction cup 86 is discharged by way of the attaching pipe 130 coupled to the other end of the suction hose 89. Since the suction cups 84, 85 and 86 are respectively have shapes like suckers and are made of flexible rubber, when the internal spaces thereof are negatively pressurized, the suction cups 84, 85 and 86 are pressed by the external atmospheric pressure and deformed so that the openings of the suction cups 84, 85 and 86 are so strongly sucked to the flat wall surface G that they are hardly separated from the wall surface G. Accordingly, the suction force caused by the suction cups 84, 85 and 86 maintains the cover body 72 by way of the suction legs 81, 82 and 83 so as to prevent the cover body 72 from coming off the wall surface G, thereby fixing the cover body 72 at the position where the hole is intended to be bored.

As mentioned above, when the vacuum suction device 146 is operated, the cover body 72 can be maintained at the working position on the wall surface G. Thereafter, the bit of an electrically-powered hammer (omitted in Fig. 10 but shown in Fig. 5) is inserted into the center of the slits 105 of the shutter sheet 74. Since the plane surface of the shutter sheet 74 is separated into a plurality of triangular small pieces by the slits 105, the bit can elastically bend the triangular small pieces so as to be inserted freely. When the electrically-powered hammer is driven while the tip end thereof contacts the wall surface G, the bit can give a strong vibration to the wall surface G, thereby boring the hole in the surface of concrete.

When the hole is bored in the wall surface G or the opening is defined in the wall surface G using the bit, broken pieces or dust particles of concrete are generated from the wall surface G due to the vibration of the bit. However, since the air inside the space F of the cover body 72 is always sucked because of the operation of the vacuum suction device 146, the broken pieces or dust particles of concrete flows in the direction of the inlet pipe 77 together with the air, and is passed through the joint 78, the communicating hose 148, the coupling pipe 138 and the coupling pipe 147 and is sucked by the vacuum suction device 146. Since the dust collecting bag is accommodated inside the vacuum suction device 146 and the dust collecting bag permits the air to be passed therethrough but catches the dust by its film and collect it, it catches the broken pieces and dust of concrete from the air sucked through the space F of the cover body 72 and does not scatter such broken pieces and dust outside. As a result, the broken pieces and dust of concrete generated when the hole is bored in the wall surface G are not scattered outside by the space F of the cover body 72 and the vacuum suction device 146, but the cleaned air alone is discharged, whereby the operation can be performed under hygienic condition without generating mist or fume of the broken pieces and dust at the working site. When the air inside the space F of the cover body 72 is discharged, the air corresponding to the discharged or lost air enters from the slits 105 of the shutter sheet 74 so that the space F is filled up by the entered air.

As long as the vacuum suction device 146 is operated, the spaces inside the suction cups 84, 85 and 86 are negatively pressurized so as to prevent the cover body 72 from coming off the wall surface G. In order to detach the dust collector 71 from the wall surface G, the operation of the vacuum suction device 146 is stopped for preventing negative pressure from being generated inside the internal spaces of the suction cups 84, 85 and 86 so that the suction cups 84, 85 and 86 are released from holding the suction to the wall surface G. As a result, the dust collector 71 can be easily detached from the wall surface G. In the second embodiment, the cover body 72 is not dual chambered like the first embodiment so that the internal space F of the cover body 72 can be widely used. Further, since the cover body 72 can remain sucked to the wall surface G only by the suction force of the suction cups 84, 85 and 86, the cover body 72 can be strongly fixed.

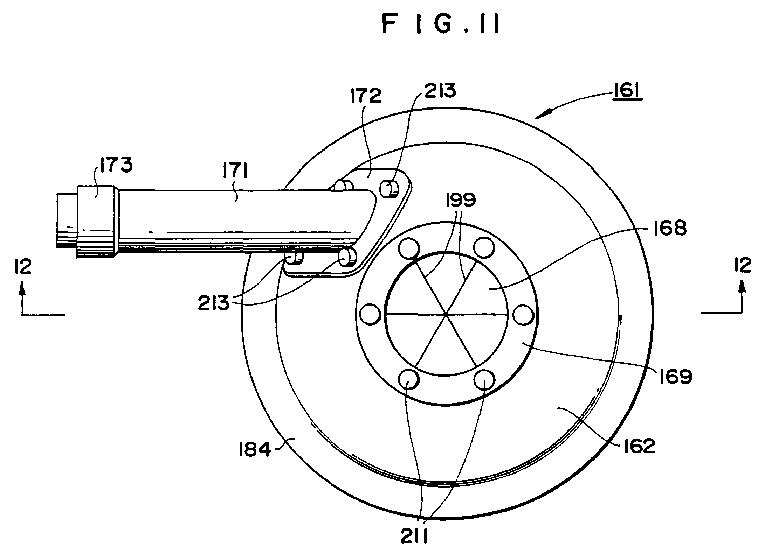

### Third Embodiment (Figs. 11 through 15):

A dust collector according to a third embodiment of the invention will be now described with reference to Figs. 11 through 15.

As shown in Fig. 11, a suction body 162 which is a main component of the dust collector 161 has a shape like a metal basin which is turned upside down in its external appearance, and an upper surface thereof corresponding to a bottom of the metal basin is circular and flat. Shutter sheet 167 and 168 serving as circular air sealing means are brought into contact with the circular upper surface of the suction body 162, and a thin ring-shaped retaining ring 169 made of metal is brought into and fixed to the upper surfaces of the shutter sheets 167 and 168 at their peripheral surfaces. A hollow inlet pipe 171 which serves as discharge means is coupled to the suction body 162 at its outer periphery. A central axis of the inlet pipe 171 is directed aslant to be deviated from the center of the suction body 162. A joint 173 is fixed to a distal end of the inlet pipe 171 so as to be coupled to a tip end of a bellowslike tube (described later). In such a manner, the inlet pipe 171 and the suction body 162 are coupled to each other in skewed relationship, which represents an external appearance as if a handle of a frying pan were attached aslant to a frying pan body.

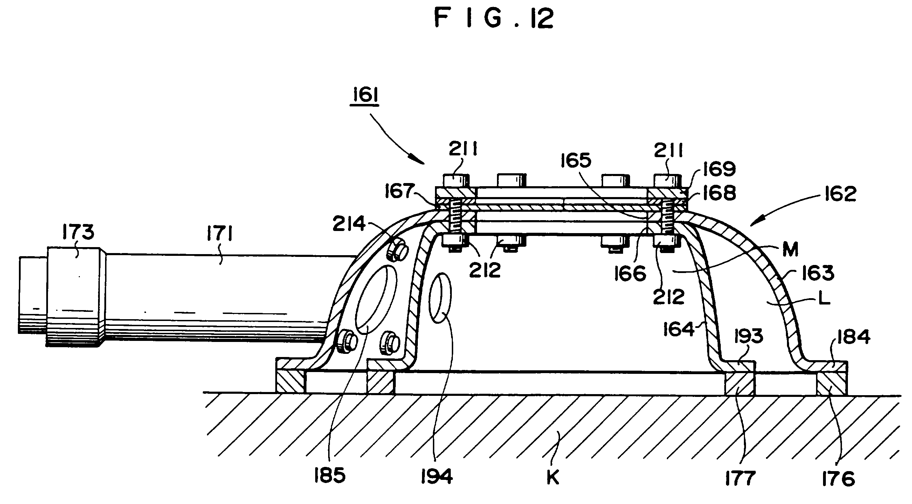

Fig. 12 is a cross sectional view of the suction body 162 which is cut vertically along the line 12-12 to show an internal structure of the suction body 162. The suction body 162 has a dual chambered internal structure in cross section as shown in Fig. 12, and comprises the outer cover body 163 for serving as a negative pressure generation body and an internal isolating body 164 serving as a dust catching body. The outer cover body 163 has a shape like a metal basin which is turned upside down, and the internal isolating body 164 has a shape like a bowl which is turned upside down. The internal space of the outer cover body 163 is larger than the outer diameter of the internal isolating body 164. Even if the internal isolating body 164 is contained in the outer cover body 163, there is formed an appropriate gap between the outer cover body 163 and the internal isolating body 164. An upper portion of the outer cover body 163 corresponding to the bottom of the metal basin (upper portion in Fig. 2) is flat and circular, and a working port 165 having a diameter which is half of the diameter of the bottom is defined at the center thereof and it has a ring shape. The periphery of the outer cover body 163 is curved to arc like a frame of a drum and the lower end (lower portion in Fig. 12) of the outer cover body 163 has a ring-shaped plane surface which is widened horizontally. A cushion ring 176, which is made of an elastic material such as sponge and is formed like a ring serving as sealing means, is fixed to the lower end plane surface of the outer cover body 163. The lower surface of the cushion ring 176 contacts the wall surface K as shown in Fig. 12.

The internal isolating body 164 has a shape like a bowl which is turned upside down and it is opened largely downward and also has a ring-shaped working port 166 at the upper portion thereof corresponding to the bottom of the bowl. The internal isolating body 164 is hemispherical at its outer periphery and has a ring-shaped horizontally widened plane surface at its lower end. A cushion ring 177 which is made of an elastic material such as sponge and is formed like a ring serving as sealing means, is fixed to the lower end plane surface of the internal isolating body 164. The lower surface of the cushion ring 177 contacts the wall surface K as shown in Fig. 12.

The horizontally widened ring-shaped plane surface of the outer cover body 163 at the lower end and the horizontally widened ring-shaped plane surface of the internal isolating body 164 at the lower end are flush with each other. Accordingly, the plane surfaces of both cushion rings 176 and 177 are positioned at the same plane surface, and both cushion rings 176 and 177 can contact the wall surface K at the same time when they are brought into contact with the wall surface K, as shown in Fig. 12. Since the internal isolating body 164 is accommodated inside the outer cover body 163, the internal space of the outer cover body 163 is partitioned such that the interior of the outer cover body 163 is divided into a space L formed between the inner surface of the outer cover body 163 and the outer surface of the internal isolating body 164 and a space M formed inside the internal isolating body 164 when the cushion rings 176 and 177 contact the wall surface K.

The upper portion of the outer cover body 163 corresponding to the bottom of the metal basin has a flat ring-shaped plane surface with which the discoid shutter sheets 167 and 168 are brought into contact, and the ring-shaped retaining ring 169 is brought into contact with the upper surface of the shutter sheet 168 at its periphery. The retaining ring 169 is made of a thin metal plate and is formed by largely cutting the center of the thin metal plate in circular shape, thereby forming an opening. The retaining ring 169 and the upper surface of the outer cover body 163 are fastened by screws so as to clamp the shutter sheets 167 and 168 from the upper and lower sides thereof and to fix the shutter sheets 167 and 168 between the retaining ring 169 and the outer cover body 163. Each of the shutter sheets 167 and 168 is made of an elastic material such as vinyl or rubber having a substantially large thickness, and has a plurality of slits 197 and 199 formed by slitting it radially, namely, from the center toward the periphery thereof. The centers of the slits 197 and 199 of the shutter sheets 167 and 168 are aligned with the center line of the working port 165. The centers of the shutter sheets 167 and 168 can be opened and closed elastically by the slits 197 and 199. It is possible to insert a drill or bit into the working ports 165 and 166 through the centers of the slits 197 and 199. The inserted drill or bit is brought into contact with the members of the shutter sheets 167 and 168 which are divided into small pieces by the slits 197 and 199 at the peripheries thereof so as to seal the shutter sheets 167 and 168 to prevent air from escaping through the space M.

The tip end of the inlet pipe 171 communicates with the drum-shaped side surface of the outer cover body 163, and the opening of the same communicates with an inlet port 185 defined in the side surface of the outer cover body 163, and the inlet pipe 171 and the space L inside the outer cover body 163 communicate with each other. An inlet port 194 serving as air introduction means is defined in the side surface of the internal isolating body 164 in such a manner that the inner and outer walls of the internal isolating body 164 is penetrated. The space M of the internal isolating body 164 and the internal space L of the outer cover body 163 communicate with each other by way of the inlet port 194.

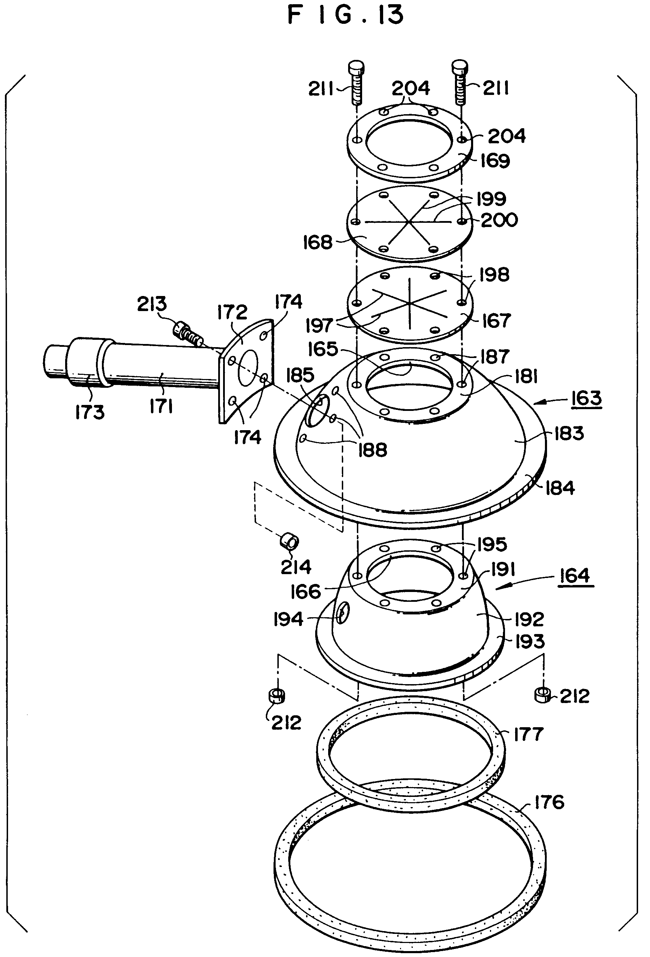

Each component constituting the dust collector 161 is exploded and the arrangement thereof will be described in detail with reference to Fig. 13.

The outer cover body 163 has a shape like a metal basin which is turned upside down, and the upper surface of the outer cover body 163 corresponding to the bottom of the metal basin forms a ring portion 181 which is circular and has a working port 165 defined at its center. The inner diameter of the working port 165 is about half of the outer diameter of the ring portion 181, and the ring portion 181 has a flat and ring-shaped configuration. Screw holes 187 are bored in the ring portion 181 at the periphery thereof in an equal interval. A substantially cylindrical barrel portion 183, which enlarges downward, is continued from the outer periphery of the ring portion 181. The barrel portion 183 corresponds to the peripheral surface of the metal basin. The barrel portion 183 has an outer diameter which is enlarged downward and curved as shown in Fig. 13, and the lower end peripheral edge thereof is coupled to a horizontally ring-shaped pressure portion 184. The pressure portion 184 corresponds to the edge portion of the metal basin. The circular inlet port 185 is formed by penetrating the side surface of the barrel portion 183, and a plurality of screw holes 188 are bored in the side surface of the barrel portion 183 around the periphery of the inlet port 185.

The internal isolating body 164 is accommodated in the internal space of the outer cover body 163, the internal isolating body 164 has a shape like a bowl which is turned upside down in its external appearance. The upper surface of the internal isolating body 164 corresponding to the bottom of the bowl forms a ring portion 191 periphery of which is circular. A working port 166 is defined in the center of the ring portion 191. The working port 166 has the same inner diameter as that of the working port 165 of the outer cover body 163, and a plurality of screw holes 195 are bored in the periphery of the ring portion 191 in an equal interval. A skirt portion 192 which is enlarged downwardly is continued from and coupled to the outer periphery of the ring portion 191, and it has a shape corresponding to the outer periphery of the bowl, namely, it is curved so as to arc downward. A pressure portion 193 is coupled to the circular peripheral edge of the widened lower end of the skirt portion 192, and it forms a horizontally widened ring shape. The inlet port 194 is defined in the side surface of the skirt portion 192.

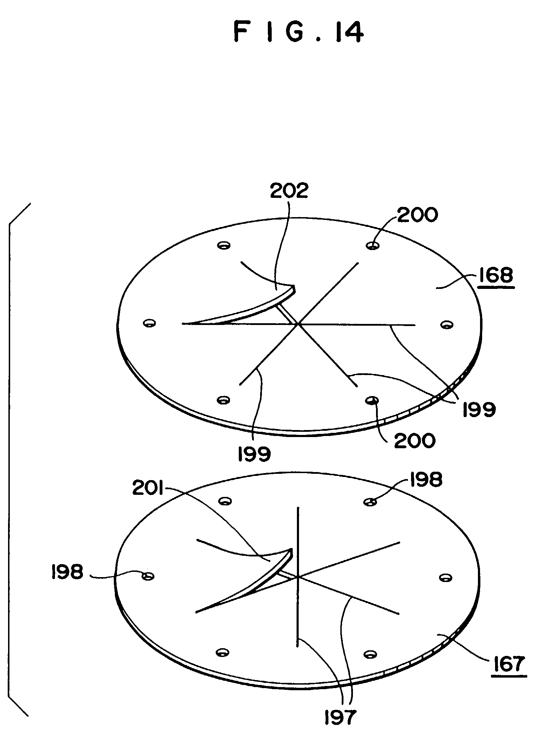

The arrangement of the shutter sheets 167 and 168 will be now described with reference to Fig. 14. The shutter sheets 167 and 168 are discoid and made of an elastic material such as a vinyl plate or a rubber plate having a substantially large thickness. The outer diameters of the shutter sheets 167 and 168 are substantially the same as that of the ring portion 181. The shutter sheet 167 is slit straight radially from the center toward the periphery thereof to form a plurality of slits 197. Each terminal end of the slits 197 is extended to a position close to the circumferential edge of the shutter sheet 167. The shutter sheet 167 seems to be a lemon cut in round slices. When the slits 197 are formed radially from the center of the shutter sheet 167, elastic triangle pieces 201 comprising a plurality of closing small pieces each having isosceles triangles are separated at the center of the shutter sheet 167. Likewise, the shutter sheet 168 is slit straight radially from the center toward the periphery thereof to form a plurality of slits 199. Each terminal end of the slits 199 is extended to a position close to the circumferential edge of the shutter sheet 168. The shutter sheet 168 seems to be a lemon cut in round slices. When the slits 199 are formed radially from the center of the shutter sheet 167, elastic triangle pieces 202 comprising a plurality of closing small pieces each having isosceles triangles are separated at the center of the shutter sheet 168.

Since materials of the shutter sheets 167 and 168 are the vinyl plate or the rubber plate, each of the separated elastic triangle pieces 201 and 202 can be bent upward or downward with restoring force (see a state where the elastic triangle pieces 201 and 202 are bent upward in Fig. 14). Since the elastic triangle pieces 201 and 202 can be elastically bent while the bases of the triangles are coupled to the peripheries of the shutter sheets 167 and 168, when a drill or bit is inserted in the center lines of the slits 197 and 198, the shutter sheets 167 and 168 allow the drill or bit to enter therethrough without any resistance because each of the elastic triangle pieces 201 and 202 can be bent in the inserting direction of the drill or bit. Further, since each of the elastic triangle pieces 201 and 202 has a restoring force, it is brought into contact with the periphery of the drill or bit so as to shield in order to prevent air from leaking outside. A plurality of screw holes 198 and 200 are bored by penetrating vertically the periphery of the shutter sheets 167 and 168 in a given interval. The screw holes 198 of the shutter sheet 167 and the screw holes 200 of the shutter sheet 168 are displaced in a circumferential direction. That is, when the shutter sheets 167 and 168 are laid on each other in a state where both holes are aligned with one another, each slit 197 is set to be positioned between a pair of slits 199. In this case, linearly positioned slits 197 and 199 are positioned not to be overlaid with one another in the state where centers of both slits are aligned with each other.

The retaining ring 169 is made of a thin metal material, and has an outer diameter which is substantially the same as those of the shutter sheets 167 and 168 (and also the same time the outer diameter of the ring portion 181). The retaining ring 169 has a large opening at the center thereof. Accordingly, the retaining ring 169 has a large diameter ring-shaped configuration while the width between the inner and outer diameters is small. A plurality of screw holes 204 are formed in the retaining ring 169 at the periphery thereof in a given interval by penetrating the retaining ring 169 vertically.

The inlet pipe 171 to be fixed to the side surface of the barrel portion 183 has the hollow tubular shape, and the joint 173 to be coupled to a bellowslike hose (described later) is coupled to the rear end of the inlet pipe 171. An attachment piece 172 which is widened at the periphery thereof is fixed to the tip end periphery of the inlet pipe 171, and the inlet pipe 171 and the attachment piece 172 are formed to be integrated with each other. The inner surface of the attachment piece 172 (right surface in Fig. 13) is formed to have a curved surface having the same curvature as that of the outer periphery of the barrel portion 183. When the inner surface of the attachment piece 172 is brought into contact with the other periphery of the barrel portion 183, they can be brought into contact with each other without generating a gap therebetween. Screw holes 174 are bored in the attachment piece 172 at the periphery thereof.

The outer cover body 163, the internal isolating body 164 and the inlet pipe 171 have respectively shapes as shown in Fig. 13 and are made of a material such as FRP or reinforcing plastic or thin aluminum.

The procedure for assembling the dust collector 161 using these components will be now described. The internal isolating body 164 is inserted into the internal space of the outer cover body 163 and the upper surface of the ring portion 191 is brought into contact with the lower surface of the ring portion 181. Then, the shutter sheets 167 and 168 are placed on the flat surface of the upper surface of the ring portion 181 while they are laid on each other vertically, and then the retaining ring 169 is placed on the upper surface of the shutter sheet 168. Thereafter screw holes 204, 200, 198, 187 and 195 are aligned with one another. Thereafter, bolts 211 are sequentially inserted into the screw holes 204, 200, 198, 187 and 195 in this order from the upper portion so as to penetrate thereof. Then, nuts 212 are screwed into the bolts 211 from the back side of the ring portion 191, thereafter the nuts 212 are fastened so as to retain the shutter sheets 167 and 168. As a result, the ring portion 191 is coupled to the ring portion 181 so that the internal isolating body 164 is accommodated into and fixed to the outer cover body 163. Accordingly, dual spaces are partitioned inside the outer cover body 163 as shown in Fig. 12. The lower surface of the pressure portion 184 and that of the inlet port 194 are allowed to be flush with each other in a state where the outer cover body 163 and the internal isolating body 164 are assembled. As a result, the upper and lower surfaces of a pair of shutter sheets 167 and 168 are clamped by and fixed to the ring portion 181 retaining rings 169 and the centers thereof are fixed between the ring portion 181 and the retaining ring 169 while they exposed at the opening of the retaining ring 169.

The tip end opening of the inlet pipe 171 is aligned with the inlet port 185 defined in the side surface of the assembled outer cover body 163 while an inner surface of the attachment piece 172 is brought into contact with the outer peripheral surface of the outer cover body 163. Thereafter the screw holes 174 and 188 are aligned with one another, then the bolts 213 are inserted into the screw holes 174 and 188, successively the nuts 214 are screwed into the tip ends of the bolts 213 protruding from the inner surface of the outer cover body 163, then the nuts 214 are fastened. As a result, the attachment piece 172 is fixed to the barrel portion 183 of the outer cover body 163 so that the axis of the inlet pipe 171 can be set to be deviated from the center line of the outer cover body 163. When the adhesive is applied between the outer periphery of the barrel portion 183 and the inner surface of the attachment piece 172, they can be airtightly coupled to each other.

The cushion rings 176 and 177 are made of a material such as sponge or foaming rubber, and it is elastic and has a restoring performance. The cushion ring 176 has a ring shape and has an outer diameter which is substantially the same as that of the pressure portion 184, and it is airtightly fixed to the lower surface of the pressure portion 184 by way of an adhesive, etc. Likewise, the cushion ring 177 has a ring shape and has an outer diameter which is substantially the same as that of the pressure portion 193, and it is airtightly fixed to the lower surface of the pressure portion 193 by way of the adhesive, etc. Since the cushion rings 176 and 177 are elastic when the pressure portions 184 and 193 are pressed against the wall surface K, they are brought into contact with the wall surface K, and hence they are deformed along the shape of the wall surface K owing to its elasticity. As a result, air is prevented from being leaked out from the internal space between the outer cover body 163 and the internal isolating body 164.

The dust collector 161 is installed on the wall surface K made of concrete (e.g., an inside of a completed building or a body of building) at a position where the hole is intended to be bored in the wall surface K. In this installation, the centers of the shutter sheets 167 and 168 of the dust collector 161 (centers of the slits 197 and 199) are aligned with the hole to be bored. The cushion ring 176 of the outer cover body 163 and the cushion ring 177 of the internal isolating body 164 are respectively brought into contact with the wall surface K. Thereafter, an end of a communicating hose (not shown but it is the same as the communicating hose 58 in Fig. 5) is coupled to the opening of the joint 173 while the other end of the communicating hose is coupled to a vacuum suction machine (not shown). When the vacuum suction device is operated, the air inside the inlet pipe 171 is sucked through the joint 173 and the air inside the space L of the outer cover 163 is discharged outside through the inlet port 185, and hence the pressure inside the space L is negatively pressurized.

Since the space L is partitioned by the outer cover body 163 and the internal isolating body 164, and the opening at the lower portion thereof (the side brought into contact with the wall surface K in Fig. 12) is airtightly brought into contact with the wall surface K by the cushion rings 176 and 177, the space L becomes a doughnut-shaped closed space in which air is not introduced. Since the space L is airtightly sealed from the outside and air is discharged from the inlet port 185, the atmospheric pressure presses the outer surface of the outer cover body 163 so that it fixes the outer cover body 163 (i.e. the entire dust collector 161) to the wall surface K so as to prevent to the outer cover body 163 from coming off the wall surface K. Accordingly, the entire dust collector 161 is kept on the wall surface K and it is not come off the wall surface K while it is installed at the initial position. The dust collector 161 remains sucked to the wall surface K until the vacuum suction device is operated to keep the negative pressure inside the space L through the inlet port 185.

When the air inside the space L is discharged, since the inlet port 194 is defined in the side surface of the skirt portion 192, the spaces L and M communicate with each other, and hence the air flows through the inlet port 194. Accordingly, the air is sucked from the space M of the internal isolating body 164 and is introduced into the space L. However, since the working port 166 of the internal isolating body 164 is closed together with the working port 165 of the outer cover body 163 by the shutter sheets 167 and 168, it prevents the air from entering from the outside of the outer cover body 163, thereby maintaining the negative pressure inside the space L. Although the air enters from the slits 197 and 199 of the shutter sheets 167 and 168 into the internal isolating body 164, it is less than that sucked through the inlet pipe 171 in the amount so that the pressure inside the space L remains negative pressure to permit the dust collector 161 to suck to the wall surface K. Even if the air flows from the space M to the space L, the air in the space L is more negatively pressurized than that in the space M since the opening of the inlet port 194 serves to throttle the air, and hence the pressure in the space L is not sharply increased.

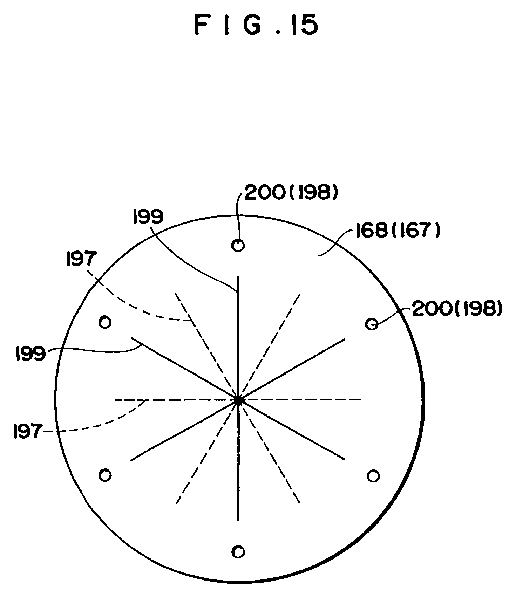

The tip end of a bit attached to the an electrically-powered hammer is inserted into the centers of the shutter sheets 167 and 168 while the dust collector 161 remains sucked to the wall surface K (the electrically-powered hammer and the bit are the same as those shown in Fig. 5). When the bit is inserted into the center of the shutter sheets 167 and 168, each of the elastic triangle pieces 201 and 202 partitioned by the slits 197 and 199 is bent owing to its elasticity, and hence it does not prevent the bit from entering the shutter sheets 167 and 168, namely, it permits the bit to enter the shutter sheets 167 and 168. Accordingly, the tip end of the bit can contact the wall surface K at the position inside the internal isolating body 164 as shown in Fig. 12. After the bit is inserted into the shutter sheets 167 and 168, each of elastic triangle pieces 201 and 202 is brought into contact with the side surface of the bit due to its elasticity so as to restrain fresh air from entering into the space M, thereby preventing the pressure inside the space M from being increased. The shutter sheets 167 and 168 are combined in such a manner that the slits 197 and 199 thereof are not overlaid with each other as shown in Fig. 15. The slits 197 and 199 are shielded by the opposite elastic triangle pieces 201 and 202 so as to prevent air from entering through the slits 197 and 199. When the bit is inserted through the slits 197 and 199, the elastic triangle pieces 201 and 202 are bent downward as shown in Fig. 12 and the intervals between the slits 197 and 199 are increased, but the slits 197 are closed by the centers of the elastic triangle pieces 202 and the slits 199 are closed by the centers of the elastic triangle pieces 201, thereby preventing air from entering through the slits 197 and 199. Since the tip ends of the elastic triangle pieces 201 and 202 which are overlaid on each other vertically contact the periphery of the bit, the contacting areas of the elastic triangle pieces 201 and 202 are increased, thereby preventing the centers of the slits 197 and 199 from being opened.

When the electrically-powered hammer is driven after the bit is inserted into the internal isolating body 164, the bit strikes against the wall surface K with strong impact force so as to bore a hole having a given diameter. When the bit bores in concrete, broken pieces or dust particle of concrete is peeled off from the wall surface K and is filled inside the space M. At this time, since the vacuum suction device is operated to suck the air inside the space M by way of the inlet port 194, the peeled off broken pieces and dust particles are sucked into the vacuum suction machine from the communicating hose through the inlet ports 194 and 185 and the inlet pipe 171. When the air in the space M is sucked, the space M is short of air but appropriate amount of air is introduced inside the space M through the slits 197 and 199, which replenishes shortage of sucked air.

Since the dust collecting bag made of paper or cloth is accommodated in the vacuum suction device, air sucked through the pipe 171 is passed through the dust collecting bag and the air alone is discharged from the dust collecting bag, and the broken pieces and dust particles are caught by the surface of the dust collecting bag. Accordingly, although the broken pieces and dust particles of concrete generated inside the internal isolating body 164 which is closed from the outside and under negative pressure when the hole is bored in the wall surface B by the bit are not scattered outside of the dust collector 161. The broken pieces and dust particles are sucked by the vacuum suction device and separated from the air by the dust collecting bag so that only the pure air is discharged by the vacuum suction device and the broken pieces and dust particles are not scattered outside. As mentioned above, since the generation and catching of the broken pieces and dust particles are carried out inside the space which is isolated and closed from the outside, the broken pieces or dust particles are not scattered at the periphery of the working site where the wall surface K is crushed, and hence the work can be performed under a clean environment.

After the bit bores the hole or defines the opening in the wall surface K during the crashing operation, the bit is pulled upward in Fig. 12, then the bit is extracted from the shutter sheets 167 and 168. When the bit is extracted from the shutter sheets 167 and 168, each of the elastic triangle pieces 201 and 202 which is partitioned by the slits 197 and 199 is returned to its original position owing to its own elasticity and restored to a flat shape, thereby preventing the fresh air from entering the space M. When the operation of the vacuum suction device is stopped thereafter, the suction of air inside the space L is stopped so that negative pressure generated in the space L is lost, thereby releasing the pressure for pressing the dust collector 161 by the atmospheric pressure. As a result, the suction force of the dust collector 161 to the wall surface K is released, and hence the dust collector 161 can move away from the wall surface K and it can be moved to a next crashing position on the wall surface K.

Although a particular preferred embodiment of the invention has been disclosed in detail for illustrative purposes, it will be recognized that variations or modifications of the disclosed apparatus, including the rearrangement of parts, lie within the scope of the present invention.

## Claims

1. A dust collector comprising:
a bowl-shaped dust catching body (14, 72) having a large opening at a first end thereof and a working port (15, 73) at a second end thereof opposite to the large opening, the working port (15, 73) being positioned at a center of the second end of the dust catching body (14, 72), the working port(15, 73) permitting a crushing tool (62) to move in the working port (15, 73) or move away from the working port (15, 73);
air closing means (16, 74) fixed to the working port (15, 72) for permitting the crushing tool (62) to enter therethrough while substantially preventing air to flow through the air closing means (16, 74);
sealing means (27, 79) fixed to a periphery of the large opening of the dust catching body (14, 72), the sealing means (27, 79) being made of a flexible material and contacting a crushing operation surface (B, G);
dust discharge means (22, 77) communicating with the dust catching body (14, 72) for sucking air from inside the dust catching body (14, 72);
wherein the large opening of the dust catching body (14, 72) is directed to and brought into contact with the crushing operation surface (B, G) by way of the sealing means (27, 79);
wherein air in a space (D, F) defined between the dust catching body (14, 72) and the crushing operation surface (B, G) is sucked by the dust discharge means (22, 77) to secure the dust catching body against the crushing operation surface; and
wherein dust generated when the crushing operating surface (B, G) is crushed by the crushing tool (62) inserted through the air closing means (16,74) is discharged by the dust discharge means (22, 77).

2. The dust collector of Claim 1, further including:
a bowl-shaped negative pressure generation body (13) accommodating the dust catching body (14) therein to form dual peripheral walls, the negative pressure generation body (13) having a second large opening at one end thereof;
second sealing means (26) fixed to periphery of the second large opening of the negative pressure generation body (13), the second sealing means (26) being made of a flexible material and contacting a crushing operation surface (B);
air discharge means (21) communicating with the negative pressure generation body (13) for sucking air from a space (c) defined between the dust catching body (14) and the negative pressure generation body (13); and
wherein the second opening of the negative pressure generation body (13) is directed to and brought into contact with the crushing operation surface (B) by way of the second sealing means (26), the dust catching body (14) and the negative pressure generation body (14) being fixed to the crushing operation surface (B) when air in the space © defined between the dust catching body (14) and the negative pressure generation body (13) is sucked by the air discharge means (21).

3. The dust collector of Claim 1 or Claim 2, further including:
suction means (84, 85, 86) which defines an internal space and is made of a flexible material, the suction means (84, 85, 86) having a second large opening at one end thereof to contact the crushing operation surface (G);
coupling means (81, 82, 83) for coupling the suction means (84, 85, 86) to the dust catching body (72);
inlet means (128, 129, 130) for sucking air from the internal space of the suction means (84, 85, 86) to allow the suction means (84, 85, 86) to be negatively pressurized; and
wherein the inlet means (128, 129, 130) facilitates negatively pressurizing the internal space of the suction means (84, 85, 86) so as to allow the suction means (84, 85, 86) to be fixed to the crushing operation surface (G), thereby allowing the dust catching body (72) to be maintained at the same position.

4. A dust collector according to Claim 3, further comprising an ejector (136) coupled to the dust discharge means (77), wherein said inlet means is coupled to a suction side (142) of the ejector (136), and wherein air in the inlet means (128, 129, 130) is sucked by air current from the dust discharge means (77) passing through the ejector (136).

5. A dust collector comprising:
a bowl-shaped dust catching body (164) having a first large opening at a first end thereof and a working port (165) at a second end thereof opposite to the large opening, the working port (165) being positioned at a center of the second end of the dust catching body (164), the working port (165) permitting a crushing tool (62) to move in the working port (165) or move away from the working port (165);
a bowl-shaped negative pressure generation body (163) accommodating the dust catching body (164) therein to form dual peripheral walls, the negative pressure generation body (163) having a second large opening at one end thereof;
air closing means (167) fixed to the working port (165) for permitting the crushing tool (62) to enter therethrough while substantially preventing air to flow through the air closing means (167);
sealing means (176, 177) fixed to peripheries of the first large opening and the second large opening, the sealing means (176, 177) being made of a flexible material and contacting a crushing operation surface (K);
discharge means (171) communicating with the negative pressure generation body (163) for sucking air from a space (L) defined between the dust catching body (164) and the negative pressure generation body (163);
air introduction means (194) communicating with inner and outer surfaces of the dust catching body (164), thereby permitting air to flow through the dust catching body (164);
wherein the first large opening and the second large opening are directed to and brought into contact with the crushing operation surface (K) by way of the sealing means (176, 177), the dust catching body (164) and the negative pressure generation body (163) being fixed to the crushing operation surface (K) when air in the space (L) defined between the dust catching body (164) and the negative pressure generation body (163) is sucked by the discharge means (171); and
wherein dust generated when the crushing operating surface (K) is crushed by the crushing tool (62) inserted through the air closing means (167) is discharged by the discharge means (171) through the air introduction means (194).

6. A dust collector according to any one of Claims 1-5, wherein the air closing means comprises one or more elastic flat plates (16, 74, 167) which are slit radially from a center thereof to form a plurality of small elastic closing pieces (16, 201).

7. A dust collector according to any one of Claims 1-5, wherein the air closing means comprises a plurality of elastic flat plates (167, 168) which are laid on one another, and disposed in such a manner that slits (197, 199) of the plurality of flat plates are not laid on one another in a vertical direction, each said flat plate being slit radially from a center thereof to form a plurality of elastic closing small pieces (201, 202).

8. A dust collector comprising:
a dust catching member (14, 72, 164) having a first port (15, 73, 166) for receiving a crushing tool (62) and a second port for abutting against a surface to be crushed (B, G, K);
a sealing member (27, 79, 177) interposed between a periphery of the second port and the surface (B, G, K);
an air closure member (16, 74, 167) covering the first port (15, 73, 166) for permitting the crushing tool (62) to pass through the first port (15, 73, 166) while substantially preventing air from flowing through the first port (15, 73, 166), the dust catching member (14, 72, 164), air closure member (16, 74, 167) and surface (B, G, K) cooperating to define a substantially closed cavity (D, F, M);
a retaining member (13, 84-86, 163) coupled to the dust catching member (14, 72, 164) and being removably secured to the surface (B, G, K) for retaining the dust catching member (14, 72, 164) in a fixed position relative to the surface (B, G, K); and
an air suction device (46, 56) having means for removing dust particles and debris from the cavity (22, 77, 194), the dust particles and debris being generated by the crushing tool (62) during a crushing operation, and means for facilitating securing the retaining member to the surface (21, 87-89, 171).

9. The dust collector of Claim 8, wherein the retaining member (13, 84-86, 163) includes a third port (32, 165) for receiving the crushing tool and a fourth port for abutting against the surface (B, K), the air closure member (16, 167) covering the third port (32, 165) and cooperating with the retaining member (13, 163) and the surface (B, K) to define a second cavity (C, L), wherein the dust catching member (14, 164) is positioned within the second cavity (C, L), and further including a second sealing member (26, 176) interposed between a periphery of the fourth port and the surface (B, K).

10. The dust collector of Claim 9, wherein the means for removing dust particles and debris includes a branched pipe (22) or aperture (194) communicating with the first-mentioned cavity (D), and wherein the means for facilitating securing includes an inlet pipe (21) communicating with the second cavity (c).
